# EUROPÄISCHE PATENTSCHRIFT

(11) **EP 2 830 836 B1**
(45) Veröffentlichungstag und Bekanntmachung des Hinweises auf die Patenterteilung: **14.09.2016**
(21) Anmeldenummer: 13715176.7
(22) Anmeldetag: 28.03.2013
(51) Int. Cl.: B25J 13/06, G05B 19/409, H01H 9/02

(54) **VORRICHTUNG ZUR BEDIENUNG EINES INDUSTRIEROBOTERS**
DEVICE FOR OPERATING AN INDUSTRIAL ROBOT
DISPOSITIF DE COMMANDE D'UN ROBOT INDUSTRIEL

(30) Priorität: 29.03.2012 DE 102012102749
(43) Veröffentlichungstag der Anmeldung: 04.02.2015
(60) Teilanmeldung: 15178996.3
(73) Patentinhaber: Reis Group Holding GmbH & Co. KG, 63785 Obernburg (DE)
(72) Erfinder: SOM, Franz, 64750 Lützelbach (DE)
(74) Vertreter: Stoffregen, Hans-Herbert
(86) Internationale Anmeldenummer: PCT/EP2013/056783
(87) Internationale Veröffentlichungsnummer: WO 2013/144323

(56) Entgegenhaltungen:
- DE-A1- 19 901 481
- US-A- 5 937 143
- US-A1- 2004 090 428

## Beschreibung

Die Erfindung bezieht sich auf eine Vorrichtung in Form eines Handbediengerätes zur Bedienung eines Industrieroboters.

Eine Vorrichtung zum Steuern eines Industrieroboters in Form eines Handbediengerätes ist in der DE 10 2010 039 540 A1 beschrieben. Das Handbediengerät kann mit einer Robotersteuerung gekoppelt werden, um den Industrieroboter zu programmieren bzw. zu steuern.

Das Handbediengerät umfasst eine Elektronik, die einen Mikroprozessor umfasst, um mit der Robotersteuerung kommunizieren zu können. Ferner umfasst das Handbediengerät eine als Touchscreen ausgebildete Anzeige, eine Not-Austaste und einen als Schloss ausgebildeten Umschalter. Zur manuellen Bewegung z.B. eines Roboterarms umfasst das Handbediengerät verschiedene, voneinander unabhängig manuell betätigbare Eingabemittel bzw. Verfahrmittel, die z. B. als 6D-Maus oder als Tipp-Tasten ausgebildet sind. Mittels des Touchscreens besteht die Möglichkeit, jedem der Verfahrmittel ihr eigenes Bezugskoordinatensystem zuzuordnen. Bei der bekannten Ausführungsform erfolgt die Steuerung des Industrieroboters jedoch ausschließlich über die manuell betätigbaren Eingabemittel, so dass das Handbediengerät in seiner Herstellung aufwendig und im Betrieb anfällig ist.

Eine weitere Vorrichtung zur Bedienung eines Industrieroboters ist in der DE 10 2010 025 781 A1 beschrieben. Das Handgerät in Form eines mobilen Telefons weist einen Touchscreen auf, der einerseits als Ausgabemittel zum Ausgeben von Informationen von der Robotersteuerung, insbesondere zur Darstellung einer Bedienoberfläche und zugleich als Befehlseingabemittel zum Eingeben von Steuerbefehlen mittels Tasten dient.

Das Handgerät ist mittels einer Klemmeinrichtung, wie sie im Prinzip beispielsweise von einer Halterung für mobile Telefone in Kraftfahrzeugen bekannt ist, lösbar an einer tragbaren Sicherheitseinrichtung befestigt und mit dieser über eine USB-Schnittstelle verbunden. Die Sicherheitseingabeeinrichtung weist eine Not-Halt-Knopf, einen Zustimm-Taster sowie einen Betriebsarten-Wahlschalter auf. Nachteilig bei dieser Ausführungsform ist, dass eine Bedienperson zur sicheren Bedienung der virtuellen Tasten stets gezwungen ist, auf den Touchscreen zu blicken, um Fehleingaben zu vermeiden. Gleiches gilt bei widrigen Umgebungsbedingungen wie beispielsweise starkem Lichteinfall oder Dunkelheit, die eine Bedienung des Touchscreens erschweren würden.

Der US-A-2004/0090428 ist ein Monitor mit einem Touchscreen zu entnehmen, dessen Rahmen haptische Marken aufweist, um das Führen eines Fingers auf dem Touch-screen zu erleichtern. Der Touchscreen selbst weist abweichend von Standard-Touchscreens Erhebungen auf, die die Funktion von virtuellen Bedienelementen ausüben.

Ein Touchscreen nach der US-A-2010/0127975 weist auf dem Display vertikal und/oder horizontal verlaufende Strukturen auf, um das Führen eines Fingers zu erleichtern.

Der US-A-5 937 143 ist eine Vorrichtung zur Bedienung eines Industrieroboters zu entnehmen. Hierzu wird ein Handbedienungsgerät benutzt, das ein Touch-Display mit virtuellen Bedienelementen aufweist, die entlang des Displayrahmens und an diesem angrenzend angeordnet sind.

Der vorliegenden Erfindung liegt u. a. die Aufgabe zugrunde, eine Vorrichtung zum Steuern eines Industrieroboters so weiterzubilden, dass die Sicherheit bei der Bedienung eines Industrieroboters erhöht wird. Die Transparenz des berührungsempfindlichen Displays soll des Weiteren durch Überlagerungen nicht beeinflusst werden.

Die Aufgabe wird durch eine Vorrichtung gemäß Anspruch 1 gelöst.

Es ist vorgesehen, dass die haptischen Marken in einem das berührungsempfindliche Display zumindest bereichsweise umschließenden Displayrahmen angeordnet sind und dass die virtuellen Bedienelemente auf dem berührungsempfindlichen Display angrenzend an den Displayrahmen platziert sind. Auch können Rahmenabschnitte wie Innenränder als haptische Marken dienen.

Aufgrund der erfindungsgemäßen Lehre bilden der Rahmen mit den haptischen Marken und das berührungsempfindliche Display eine funktionelle Einheit, da Fingerführung und Funktionsauslösung ineinander übergehen, ohne den Fingerkontakt zum Rahmen und Display zu verlieren. Eine Fehlbedienung wird minimiert, da das Ertasten der Position und Auslösen des virtuellen Bedienelementes ohne Unterbrechung ineinander übergehen. Eine Blindbedienung wird hierdurch ermöglicht. Gleichzeitig ist es nicht erforderlich, dass das berührungsempfindliche Display in seinem Aufbau verändert wird. Vielmehr kann als berührungsempfindliches Display ein Standard-Touch-Display zum Einsatz gelangen, wobei insbesondere ein kapazitives Touch-Display benutzt werden sollte. Es bestünde jedoch auch die Möglichkeit, ein resistives Touch-Display zu verwenden. Nachfolgend wird der Begriff Touch-Display verwendet.

In einer weiteren bevorzugten Ausführungsform sind die haptischen Marken symmetrisch zu einer Längs- und/oder Querachse des Touch-Displays an gegenüberliegenden Rändern des Displayrahmens angeordnet.

Gemäß der Erfindung sind die wichtigsten virtuellen Bedienelemente auf dem Touch-Display so platziert, dass sie blind bedienbar sind. Dabei dient der abgesetzte und besonders ausgeprägte Displayrahmen zur taktilen Orientierung auf dem Touch-Display.

Insgesamt können vorzugsweise vier verschiedene haptische Markentypen unterschieden werden, die vorzugsweise jeweils symmetrisch am linken und/oder rechten Displayrahmen angeordnet sind.

Die haptischen Marken des Displayrahmens können als Vertiefungen wie Fingermulde, als Erhöhung wie hervorstehende Noppen und/oder als Rahmenkante oder Rahmenecke ausgebildet sein. Insbesondere sind die haptischen Marken so ausgeformt, dass sie mit den Fingern zuverlässig ertastet werden können. Dadurch wird zum einen die prinzipiell fehlende Haptik eines Touch-Displays kompensiert, zum anderen kann die Bedienperson die visuelle Aufmerksamkeit auf den Roboter und den Prozess richten ohne auf das Bediengerät sehen zu müssen, wodurch die Bediensicherheit erhöht wird.

Bei der Ausführung der haptischen Marke als Rahmenkante kann der Finger oder Stift eine Verschiebebewegung ausführen, über die ein am Rand des Displayrahmens platziertes und als Schiebe-Element ausgebildetes virtuelles Bedienelement verstellt werden kann.

Durch die Ausbildung der haptischen Marken als Vertiefung wie Fingermulde kann eine hochauflösende haptische Orientierung auf dem Displayrahmen erreicht werden, z. B. für das Ertasten von Positionen virtueller Bedienelemente, wenn diese unmittelbar neben einer der Fingermulden angeordnet sind. Jeder Vertiefung wie Fingermulde kann ein virtuelles Bedienelement eindeutig zugeordnet werden.

Bei der Ausführungsform der haptischen Marke als eine Rahmenecke des Displayrahmens kann eine exakte Position auf dem Touch-Display definiert werden. Somit kann jede der vier Ecken des Displayrahmens eine haptische Marke bilden. Auf die ausgewählten Positionen können wichtige blind zu bedienende virtuelle Bedienelemente platziert werden.

Bei der Ausführung der haptischen Marken als aus dem Displayrahmen hervorstehenden Noppen können diese als Groborientierung auf dem Displayrahmen dienen. Diese können am oberen und unteren Ende des Displayrahmens platziert werden und markieren so die obere und untere Displaybegrenzung. In der Mitte zwischen oberer und unterer Begrenzung kann eine weitere Noppe platziert sein, durch die die Mitte des Touch-Displays markiert wird. Somit kann die obere und untere Displayhälfte ertastet werden.

Gemäß einer eigenerfinderischen Ausführungsform wird eine bewährte, früher als Handrad ausgeführte Override-Funktion über ein virtuelles Schiebe-Element auf dem Touch-Display ausgeführt. Dabei ist das virtuelle Schiebe-Element auf dem Touch-Display entlang eines Randabschnittes des Displayrahmens platziert. Dadurch kann seine Position ertastet und durch Verschieben des Fingers oder Stiftes entlang des Randabschnittes verstellt werden. Die blinde Verstellung kann durch die haptischen Marken des Randabschnittes zusätzlich unterstützt werden. Der Override kann bei einer Verschiebung zwischen zwei haptischen Marken um einen festen Betrag, z. B. 20 % verstellt werden. Diese Funktion kann auch verwendet werden, um andere analoge Größen wie z.B. Prozessparameter in Blindbedienung einzustellen.

Durch das konsequente tastenlose Design des grafischen Bediener-Interfaces und durch den symmetrischen Aufbaus des Gehäuses mit den symmetrisch zur Längsmittenachse, also Mittellinie des Display angeordneten haptischen Marken, kann eine Bedienperson die Bedienobeifläche über eine einfache Setup-Funktion von Rechtshänder-Bedienung auf Linkshänder-Bedienung umschalten. Dabei werden alle Positionen der virtuellen Bedienelemente an der Längsmittenachse des Touch-Displays gespiegelt. Diese Variabilität bleibt konventionellen Geräten mit mechanisch aufgebauten Tasten vorenthalten. Die Längsmittenachse verläuft bei einem rechteckigen Display parallel und mittig zwischen den Längsrahmenschenkeln.

Eine weitere eigenerfinderische Ausführungsform der Vorrichtung zeichnet sich dadurch aus, dass ein das Touch-Display aufnehmendes Gehäuse symmetrisch aufgebaut ist. Dieses weist auf der Vorderseite links und rechts des Touch-Displays den Displayrahmen mit den haptischen Marken auf, mit deren Hilfe ausgewählte Positionen des Touch-Displays ertastet werden. Dadurch wird eine Blindbedienung des Touch-Displays ermöglicht.

Das erfindungsgemäße Gehäuse zeichnet sich dadurch aus, dass auf einer Rückseite zwei symmetrisch zur Längsmittenachse angeordnete Halteleisten ausgebildet sind, an denen das Gerät mit einer oder mit beiden Händen sicher gehalten werden kann. In jeder Halteleiste ist jeweils ein Zustimm-Schalter integriert, von denen wahlweise einer für die Verfahrfreigabe des Industrieroboters betätigt werden muss. Durch diese symmetrische Anordnung wird einer Handermüdung vorgebeugt, da die Zustimm-Schalter wechselweise mit der linken oder rechten Hand betätigt werden können. Bei einer Handermüdung kann die jeweils andere Hand die Zustimmung übernehmen, ohne dass dadurch die Verfahrfreigabe für die Roboterbewegung unterbrochen wird. Die Halteleisten verlaufen vorzugsweise benachbart zum Außenrand eines jeden Längsrahmenschenkels bzw. gehen in diesen über und weisen eine nach außen zylinderschnittförmige Geometrie auf.

Die erfindungsgemäße Vorrichtung zeichnet sich gegenüber dem Stand der Technik insbesondere dadurch aus, dass die Anzahl der Hardwarekomponenten auf ein absolutes Minimum reduziert wurde. Alle Bedienfunktionen werden konsequent in Touch-Software realisiert, mit Ausnahme der sicherheitsrelevanten Schalter wie "Not-Halt" und "Zustimmung". Es sind keine weiteren elektrischen Komponenten wie Folientasten, Schalter oder Signallampen erforderlich. Dadurch ist das System wartungsarm. Es wird ein marktübliches Standard-Touch-Display benutzt, wobei insbesondere ein kapazitives Touch-Display Verwendung findet.

Der erreichte Platzgewinn geht zugunsten eines großen komfortablen Touch-Displays. Die auf dem Touch-Display dargestellten virtuellen Bedienelemente und Anzeigen sind für die Industrieanwendung angelegt und sind kontrastreich und groß dargestellt, so dass eine zuverlässige Bedienung möglich ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: Programmierhandgerät zur Bedienung eines Industrieroboters,
- Fig. 2: einen Abschnitt eines an das Touch-Display angrenzenden Displayrahmens des Programmierhandgerätes,
- Fig. 3: einen zweiten Abschnitt eines an das Touch-Display angrenzenden Displayrahmens,
- Fig. 4: einen dritten Abschnitt eines an das Touch-Display angrenzenden Displayrahmens und
- Fig. 5: eine Rückansicht des Programmierhandgerätes

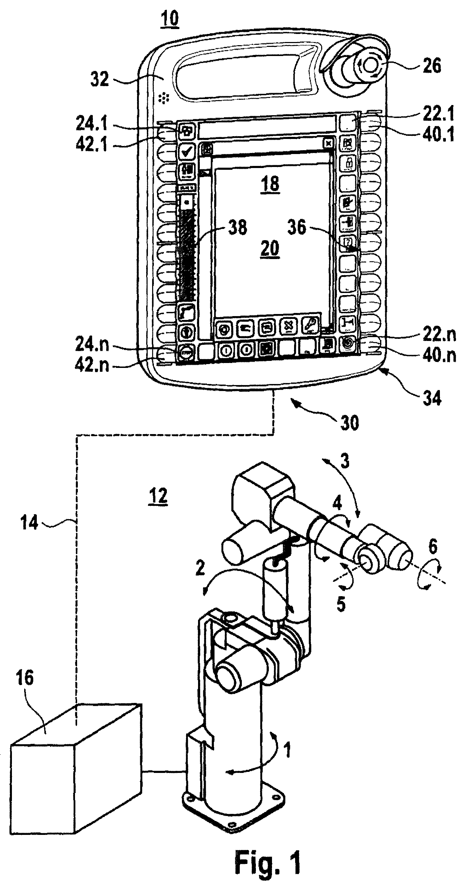

Fig. 1 zeigt eine Vorrichtung 10 in Form eines Programmierhandgerätes zur Bedienung eines Industrieroboters 12. Dazu ist das Handgerät 10 über eine drahtlose oder drahtgebundene Kommunikationsverbindung 14 mit einer Robotersteuerung 16 verbunden. Das Handgerät 10 umfasst ein grafisches Bediener-Interface 18 mit einem berührungsempfindlichen Display 20 nachfolgend Touch-Display genannt. Hierbei handelt es sich insbesondere um ein marktübliches Standard-Touch-Display kapazitiver Art. Die Erfindung wird jedoch auch dann nicht verlassen, wenn ein resistives Touch-Display verwendet wird. Durch die Verwendung eines Standard-Touch-Displays wird eine ebene, also glatte Sensorfläche genutzt. Überlagerungen auf der Sensorfläche, um z. B. eine Struktur wie Erhebung zu bilden, sind nicht vorhanden.

Das Touch-Display 20 dient zur Anzeige zumindest eines virtuellen Bedienelementes 22.1...22.n, 24.1...24.n welches eine Funktion zur Steuerung, Programmierung oder Bedienung des Industrieroboters 12 repräsentiert, wobei bei Berührung des virtuellen Bedienelementes 22.1...22.n, 24.1...24.n mit einem Finger einer Bedienperson oder einem Stift die zugeordnete Funktion ausgelöst wird.

Das Handgerät 10 umfasst des Weiteren eine Steuereinheit 30 zur Steuerung des grafischen Bediener-Interface 18 und zur Kommunikation mit der Robotersteuerung 16.

Das grafische Bediener-Interface 18 mit dem Touch-Display 20 ist zusammen mit der Steuereinheit 30 in einem Gehäuse 32 angeordnet. Das Gehäuse 32 bildet einen Displayrahmen 34, der das Touch-Display 20 randseitig umschließt. Auf einer Oberseite des Gehäuses 32 ist des Weiteren ein sicherheitsrelevanter "Not-Halt"-Schalter 26 angeordnet.

Die virtuellen Bedienelemente 22.1 .... 22.n sowie 24.1 ... 24.n sind entlang jeweils eines an das Touch-Display 20 angrenzenden Rahmenabschnitts 36, 38 des Displayrahmens angeordnet. Um eine Blind-Bedienung der virtuellen Bedienelemente 22.1 ... 22.n bzw. 24.1 ... 24.n zu ermöglichen, sind gemäß eines ersten eigenständigen Erfindungsgedankens in dem Rahmenabschnitt 36, 38 jeweils haptische Marken 40.1 ... 40.n bzw. 42.1 ... 42.n angeordnet. Jeder haptischen Marke 40.1 ... 40.n, 42.1 ... 42.n kann ein virtuelles Bedienelement 22.1 ... 22.n, 24.1 ... 24.n zugeordnet werden.

Dabei grenzt insbesondere das virtuelle Bedienelement 22.1 ... 22.n, 24.1 ... 24.n unmittelbar an der haptischen Marke 40.1 ... 40.n bzw. 42.1 ... 42.n an, so dass ein unmittelbarer Übergang von der haptischen Marke 40.1 ... 40.n bzw. 42.1 ... 42.n zum virtuellen Bedienelement 22.1 ... 22.n, 24.1 ... 24.n erfolgt. Quasi in einem Zug wird infolgedessen ein entlang einer haptischen Marke 40.1 ... 40.n bzw. 42.1 ... 42.n geführter Finger zum virtuellen Bedienelement 22.1 ... 22.n, 24.1 ... 24.n geführt. Hierdurch werden Fehlbedienungen vermieden bzw. minimiert: Zuerst wird die Position des virtuellen Bedienelementes mit Hilfe der haptischen Marke ertastet und anschließend wird die Funktion durch Berühren des virtuellen Bedienelementes ausgelöst. Ferner ist es nicht erforderlich, dass das Touch-Display 20 besonders gestaltet werden muss. Insbesondere und in Abweichung vom Stand der Technik ist es nicht erforderlich, dass auf das Touch-Display besondere überlagerte Materialien angebracht werden, wodurch anderenfalls Transparenzeinbußen auftreten.

Die haptischen Marken 40.1 ... 40.n bzw. 42.1 ... 42.n bilden eine Führung, durch die ein Finger einer Bedienperson zu dem zugeordneten virtuellen Bedienelement 22.1 ... 22.n, 24.1 ... 24.n geführt wird.

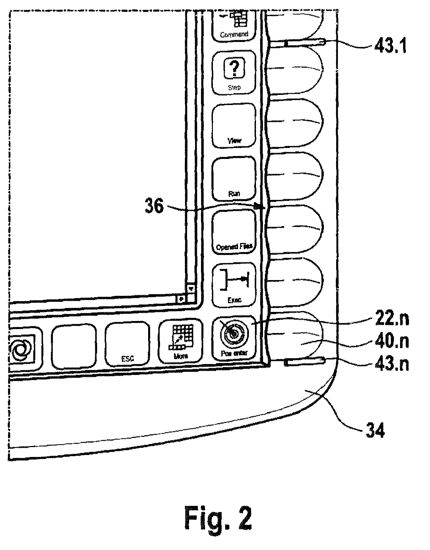

Fig. 2 zeigt eine vergrößerte Darstellung der Bedienelemente 22.1 ... 22.n und den diesen zugeordneten haptischen Marken 40.1 ... 40.n.

Durch die Anordnung der virtuellen Bedienelemente 22.1 ... 22.n bzw. 24.1 ... 24.n entlang der die haptischen Marken 40.1 ... 40.n, 42.1 ... 42.n aufweisenden Rahmenabschnitte 36, 38 wird eine zuverlässige, d. h. treffsichere Bedienung der virtuellen Bedienelemente gewährleistet. Dabei dienen die abgesetzten und besonders ausgeprägten Rahmenabschnitte 36, 38 zur taktilen Orientierung.

In dem in Fig. 2 dargestellten Ausführungsbeispiel sind die haptischen Marken 40.1 ... 40.n, 42.1 ... 42.n als Fingermulden ausgebildet, die so ausgeformt sind, dass sie mit den Fingern zuverlässig ertastet werden können und eine Führung des Fingers von den Rahmenabschnitten 36, 38 in Richtung auf das zugeordnete virtuelle Bedienelement 22.1 ... 22.n bzw. 24.1 ... 24.n sicherstellen.

Dadurch wird zum einen die prinzipiell fehlende Haptik eines Touch-Displays 20 kompensiert und zum anderen kann der Bediener die visuelle Aufmerksamkeit auf den Industrieroboter und den Prozess richten ohne auf das Handbediengerät 10 schauen zu müssen, wodurch insgesamt die Bediensicherheit erhöht wird. Eine "Blindbedienung" wird ermöglicht.

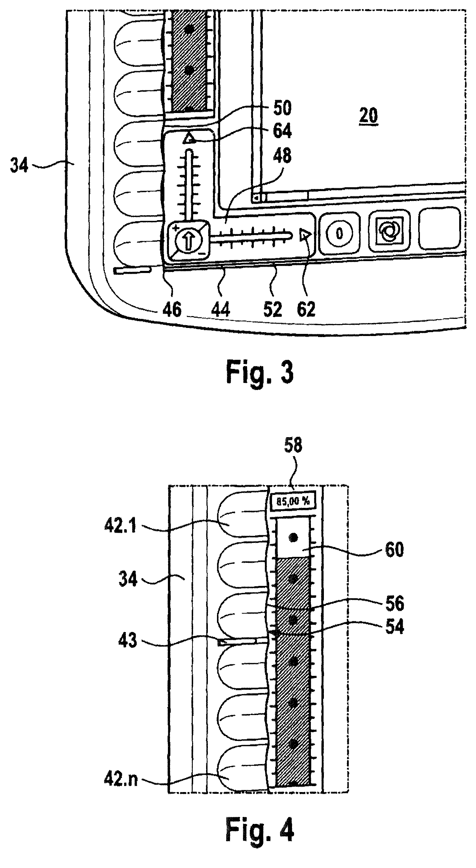

Fig. 3 zeigt eine Ausführungsform einer haptischen Marke 44 als eine an das Touch-Display 20 angrenzende Rahmenecke 46 des Displayrahmens 34. Durch die Rahmenecke 46 des Displayrahmens 34 wird eine eindeutige, exakte Position auf dem Touch-Display 20 definiert. Zu diesen ausgewählten Positionen ist ein virtuelles Bedienelement 48 wie virtuelles Schiebe-Element auf dem Touch-Display 20 vorgesehen, welches beispielsweise in linearer Richtung entlang eines displayseitigen Rahmenabschnitts 50 oder des anderen Rahmenabschnitts 52 der Rahmenecke 44 bewegt wird. Je nach ausgewählter Bewegungsrichtung ändert sich Darstellung und Funktion des virtuellen Schiebe-Elements 48.

Fig. 4 zeigt eine weitere Ausführungsform einer haptischen Marke 54, die als displayseitiger Rahmenabschnitt 56 des Displayrahmens 34 ausgebildet ist. Entlang des Rahmenabschnitts 56 kann der Finger einer Bedienperson eine Verschiebebewegung ausführen, über die ein entlang des Rahmenabschnitts 56 verlaufendes virtuelles Schiebe-Element 60 verstellt werden kann.

Die in Fig. 1 und 2 dargestellten und als Fingermulden ausgebildeten haptischen Marken 40.1 ... 40.n, 42.1 ... 42.n bilden eine haptische Orientierung auf dem Display-Rand mit hoher Auflösung, z. B. für das Erfühlen von Positionen der virtuellen Bedienelemente 22.1 ... 22.n, 24.1 ... 24.n, da diese unmittelbar neben den Fingermulden angeordnet sind. Jeder Fingermulde kann ein virtuelles Bedienelement eindeutig zugeordnet werden. Die Fingermulden 40.1 .... 40.n, 42.1 ... 42.n sind halb offen ausgeführt und in Richtung des Touch-Displays 20 geöffnet, so dass ein Finger wie in einer Rinne geführt auf das Touch-Display 20 gleiten und dort eine Funktion des virtuellen Bedienelementes 22.1 ... 22.n, 24.1 ... 24.n auslösen kann.

Gemäß eines eigenständigen Erfindungsgedankens ist vorgesehen, dass die Auslösung einer dem virtuellen Bedienelement 22.1...22.n, 24.1...24.n zugeordneten Funktion eine manuelle Aktion der Bedienperson auf das Touch-Display 20 erfordert. Um ein versehentliches Auslösen der virtuellen Bedienelemente 22.1...22.n, 24.1...24.n durch unbeabsichtigte Berührung zu verhindern, wird eine Funktion erst ausgelöst, wenn nach der Berührung des virtuellen Bedienelementes auf dem Touch-Display 20 eine vordefinierte Gestik wie beispielsweise Verziehen des Fingers in eine definierte Richtung ausgeführt wird. Die Sensibilität der Reaktion auf die Fingerbewegung kann über einen Regler stufenlos eingestellt werden. Somit kann die Intensität der erforderlichen Gestik, um Funktionen auszulösen, stufenlos eingestellt werden. Die Intensität der erforderlichen Gestik kann stufenlos eingestellt werden. Sie reicht von einer einfachen Fingerberührung, allgemein übliche Bedienung des Touch-Displays 20, bis hin zu einer speziellen kleinen Geste. Durch die besondere Ausprägung der Fingermulden 22.1...22.n, 24.1...24.n im Rahmenabschnitt 36, 38 des Displayrahmens kann der Finger in Fortsetzung der Fingermulden auf das Touch-Display gleiten. Das Auftreffen des Fingers auf dem Touch-Display 20 in Verbindung mit dem anschließenden kurzen Weitergleiten des Fingers auf dem Touch-Display wird als lineare Geste erkannt, was zur Funktionsauslösung des entsprechenden virtuellen Bedienelementes führt. Durch das Verfahren können virtuelle Bedienelemente zuverlässig bedient werden. Merkt der Bediener, dass er eine ungewollte Funktionsauslösung eingeleitet hat, kann er die Funktionsauslösung durch Zurückziehen des Fingers in die Ursprungsposition verhindern.

Sobald die Bedienperson mit dem Finger z. B. ausgehend von der Fingermulde 40.n das virtuelle Bedienelement 22.n berührt, werden die entsprechenden Koordinaten des Berührungspunktes auf dem Touch-Display durch die Steuereinheit 30 erfasst. Entsprechend der Definition einer voreingestellten Gestik wird die zugehörige Funktion erst dann ausgelöst, wenn der Finger der Bedienperson einen vorgegebenen Koordinatenbereich verlässt oder überschreitet bzw. einen vordefinierten Koordinatenbereich erreicht.

Gemäß eines weiteren eigenerfinderischen Gedankens der Erfindung werden virtuelle Bedienelemente 48, die z. B. in der Rahmenecke 46 des Displayrahmens 34 platziert sind, mit einer besonderen Gestensteuerung verknüpft. Diese können z. B. entlang der Rahmenabschnitte 50, 52 in zwei Richtungen 62, 64 verschoben werden, wie dies in Fig. 3 dargestellt ist. Jeder Bewegungsrichtung 62, 64 ist eine wählbare Funktion zugeordnet. So ist es z. B. möglich, beim Bewegen entlang des Rahmenabschnitts 52 eine Funktion "A" und beim Bewegen entlang des Rahmenabschnitts 50 eine Funktion "B" zu aktivieren. Der Grad der Auslenkung wird dabei ausgewertet, wobei zwei Auswertungsmöglichkeiten vorgesehen sind.

Gemäß einer ersten Auswertungsmöglichkeit wird der Grad der Auslenkung sofort als analoger Parameter wie Geschwindigkeitsvorgabe an die Funktion übergeben. Wird der Finger in ausgelenkter Stellung losgelassen, springt der Analogwert sofort auf null. Wird der Finger gleitend wieder in die Ausgangsposition d. h. in die Rahmenecke geführt, stellt sich der Parameter analog der Auslenkung wieder auf null zurück. Diese Funktion kann verwendet werden, um z. B. ein Bewegungsprogramm in positive oder negative Richtungen zu starten und dabei die Geschwindigkeit stufenlos zu variieren. Gemäß einer zweiten Auswertungsmöglichkeit ist vorgesehen, dass bei Überschreitung eines definierbaren Schwellwertes eine schaltende Funktion ausgelöst wird. Die Aktivierung der Funktion erfolgt erst dann, wenn bei überschrittenem Schwellwert der Finger in ausgelenkter Stellung das Touch-Display 20 verlässt. Wird der Finger jedoch ohne Loszulassen auf den Rahmenabschnitten 50, 52 wieder in die Nulllage zurückgeführt, wird die Funktionsauslösung verhindert.

Ein weiterer eigenerfinderischer Gedanke der Erfindung bezieht sich auf die Realisierung einer sogenannten Override-Funktion (Geschwindigkeitsregler), die über das virtuelle Schiebe-Bedienelement 60, welches in Fig. 4 dargestellt ist, realisiert wird. Dazu wird das Schiebe-Bedienelement 60 entlang des Rahmenabschnitts 56 und mittig zu der haptischen Marke 43 platziert. Mithilfe der haptischen Marke 43 kann die Position des Schiebe-Bedienelementes 60 ertastet und durch Verschiebung des Fingers entlang des Rahmenabschnitts 56 verstellt werden. Die blinde Verstellung wird durch die haptischen Marken 42.1...42.n, 43, 54 des Rahmenabschnittes 38 zusätzlich unterstützt. Der sogenannte Override kann bei einer Verschiebung zwischen zwei haptischen Marken 42.1...42.n um einen definierten Betrag, z. B. 20 %, verstellt werden. Mittels des randseitig angeordneten Schiebe-Bedienelementes 60 können auch andere analoge Größen wie Prozessparameter in Blindbedienung eingestellt werden.

Ein weiteres eigenerfinderisches Merkmal bezieht sich auf die symmetrische Anordnung der haptischen Marken 40.1...40.n, 42.1...42.n bezogen auf eine Längs- und/oder Quermittenachse 68des Touch-Displays 20. Die Längsmittenachse 68 ist dabei die Gerade, die mittig und parallel zu den Längsrahmenschenkeln des Displayrahmens 34 verläuft. Senkrecht hierzu verläuft die Quermittenachse, also mittig zwischen und parallel zu den kürzeren Querschenkeln des Displayrahmens 34. Dadurch wird gewährleistet, dass das Handgerät 10 sowohl für eine Rechtshänder-Bedienung als auch eine Linkshänder-Bedienung geeignet ist. Dies wird insbesondere durch das konsequente tastenlose Design des grafischen Bediener-Interfaces und durch die symmetrische Anordnung der haptischen Marken erreicht. Somit kann das grafische Bediener-Interface über eine einfache Set-Up-Funktion von Rechtshänder-Bedienung auf Linkshänder-Bedienung umgeschaltet werden. Dabei werden alle Positionen der virtuellen Bedienelemente 22.1...22.n, 24.1...24.n an der Längsmittenachse 68 des Touch-Displays 20 gespiegelt.

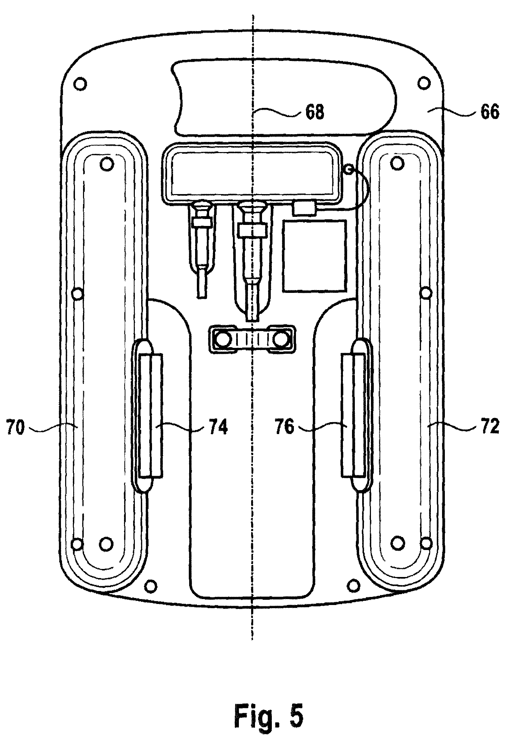

Fig. 5 zeigt eine Rückseite 66 des Gehäuses 32. Auf der Rückseite 66 und symmetrisch zur Längsmittenachse 68 sind Halteleisten 70, 72 angeordnet, an denen das Handgerät 10 mit einer oder mit beiden Händen sicher gehalten werden kann. Die Halteleisten 70, 72 können eine Außengeometrie aufweisen, die Zylinderabschnitten entspricht, wobei die Halteleisten 70, 72 vom Außenrand, also von den Längsrändern des Displayrahmens 34 ausgehen sollten. In jeder Halteleiste 70, 72 ist jeweils ein Zustimmschalter 74, 76 integriert, von denen wahlweise einer für die Verfahrfreigabe des Industrieroboters betätigt werden muss.

Durch diese symmetrische Anordnung wird einer Handermüdung vorgebeugt, da die Zustimmschalter 74, 76 wechselweise mit der linken oder rechten Hand betätigt werden können. Bei Handermüdung kann die jeweils andere Hand die Zustimmung übernehmen, ohne dass dadurch die Verfahrfreigabe für die Roboterbewegung unterbrochen wird.

## Patentansprüche

1. Vorrichtung (10) in Form eines Handbediengerätes zur Bedienung eines Industrieroboters (12), umfassend
- ein grafisches Bediener-Interface (18) mit einem von einem Displayrahmen (34) zumindest bereichsweise umgebenen berührungsempfindlichen Display (20) wie Touch-Display oder Touchscreen,
- eine Steuereinheit (30) zur Steuerung des grafischen Bediener-Interface (18) und zur Kommunikation mit einer Robotersteuerung (16),
- eine Vielzahl von auf dem Display (20) angezeigten virtuellen Bedienelementen (22.1...22.n, 24.1...24.n), die Funktionen zur Bedienung des Industrieroboters (12) repräsentieren und durch Berührung mit einem Finger einer Bedienperson oder einem Stift bedienbar sind, und die entlang des Displayrahmens (34) und an diesem angrenzend angeordnet sind, wobei jedem virtuellen Bedienelement (22.1 ... 22.n; 24.1...24.n) eine haptische Marke (40.1 ... 40.n; 42.1....42.n) in oder an dem Displayrahmen (34) zugeordnet ist, und wobei haptische Marken als Vertiefungen ausgebildet und in Richtung des Displays (20) geöffnet sind derart, dass der Finger des Bedieners oder der Stift auf das Touch-Display zum Auslösen des der Vertiefung zugeordneten virtuellen Bedienelementes (22.1 ... 22.n; 24.1...24.n) gleitet.

2. Vorrichtung nach Anspruch 1,
**dadurch gekennzeichnet,**
**dass** die haptischen Marken symmetrisch zu einer Längs- und/oder Querachse (68) des Touch-Displays (20) an gegenüberliegenden Rahmenabschnitten (36, 38) des Displayrahmens (34) angeordnet sind.

3. Vorrichtung nach Anspruch 1 oder Anspruch 2,
**dadurch gekennzeichnet,**
**dass** der Displayrahmen (34) Teil eines das Touch-Display (20) aufnehmenden Gehäuses (32) ist.

4. Vorrichtung nach zumindest einem der vorhergehenden Ansprüche,
**dadurch gekennzeichnet,**
**dass** das das Touch-Display (20) aufnehmende Gehäuse (32) symmetrisch aufgebaut ist.

5. Vorrichtung nach zumindest einem der vorhergehenden Ansprüche,
**dadurch gekennzeichnet,**
**dass** das Gehäuse (32) auf einer Rückseite (66) zwei symmetrisch angeordnete Halteleisten (70, 72) aufweist und dass in jeder Halteleiste (70, 72) jeweils ein Zustimmschalter (74, 76) integriert ist.

6. Vorrichtung nach zumindest einem der vorhergehenden Ansprüche,
**dadurch gekennzeichnet,**
**dass** eines der virtuellen Bedienelemente (60) als virtuelles Schiebe-Element ausgebildet ist, und dass das virtuelle Schiebe-Element (60) auf dem Touch-Display (20) entlang eines Randabschnittes (56) des Displayrahmens vorzugsweise mittig zu einer in Form einer Noppe ausgebildeten haptischen Marke (43) angeordnet ist, so dass der Randabschnitt (56) beim Verschieben des Fingers entlang des Randabschnitts eine Führung bildet.

7. Vorrichtung nach Anspruch 6,
**dadurch gekennzeichnet,**
**dass** einem Verschiebeweg zwischen zwei haptischen Marken (42.1...42.n) ein analoger Wert der Funktion des virtuellen Bedienelementes (60) zugeordnet ist.

## Claims

1. A device (10) in the form of a manual operating device for operating an industrial robot (12), comprising
- a graphic operator interface (18) with a touch-sensitive display (20) such as a touch display or touchscreen surrounded at least in areas by a display frame (34),
- a control unit (30) for controlling the graphic operator interface (18) and for communicating with a robot control(16),
- a variety of virtual operating elements (22.1... 22.n, 24.1... 24.n) shown on the display (20) which represent functions for operating the industrial robot (12) and can be operated by touch with a finger of an operator or with a pen and which are arranged along the display frame (34) and adjacent to it, wherein each virtual operating element (22.1... 22.n; 24.1... 24.n) is associated with a haptic mark (40.1... 40.n; 42.1... 42.n) in or on the display frame (34), wherein the haptic marks are constructed as recesses and are open in the direction of the display (20) so that a finger of an operator or a pen slides onto the touch display to initiate the virtual operating element (22.1... 22.n, 24.1... 24.n) associated with the recess.

2. The device according to claim 1,
**characterized in that**
the haptic marks are arranged symmetrically to a longitudinal and/or transverse axis (68) of the touch display (20) on opposite frame sections (36, 38) of the display frame (34).

3. The device according to claim 1 or claim 2,
**characterized in that**
the display frame (34) is part of a housing (32) that receives the touch display (20).

4. The device according to at least one of the previous claims,
**characterized in that**
the housing (32) that receives the touch display (20) is symmetrically constructed.

5. The device according to at least one of the previous claims,
**characterized in that**
the housing (32) comprises two symmetrically arranged holding strips (70, 72) on a back side (66), and that an enabling switch (74, 76) is integrated in each holding strip (70, 72).

6. The device according to at least one of the previous claims,
**characterized in that**
one of the virtual operating elements (60) is constructed as a virtual sliding element and that the virtual sliding element (60) is arranged on the touch display (20) along an edge section (56) of the display frame preferably centrally to a haptic mark (43) constructed in the form of a nub, so that the edge section (56) forms a guide when a finger is being moved along the edge section.

7. The device according to claim 6,
**characterized in that**
a moving path between two haptic marks (42.1... 42.n) is associated with an analogous value of the function of the virtual operating element (60).

## Revendications

1. Dispositif (10) sous forme de terminal manuel destiné à la commande d'un robot industriel (12), comprenant
- une interface utilisateur graphique (18) avec un écran tactile (20), tel qu'un touch-display ou touchscreen, entouré au moins en partie d'un cadre (34),
- une unité de commande (30) pour la commande de l'interface utilisateur graphique (18) et pour la communication avec une commande de robot (16),
- plusieurs éléments de commande virtuels (22.1...22.n, 24.1...24.n) affichés à l'écran (20), qui représentent des fonctions pour la commande du robot industriel (12) et peuvent être utilisés par contact avec le doigt d'un utilisateur ou avec un stylet, et qui sont disposés le long du cadre de l'écran (34) et adjacents à celui-ci, sachant qu'un repère tactile (40.1 ... 40.n ; 42.1....42.n) est affecté à chaque élément de commande virtuel (22.1 ... 22.n ; 24.1...24.n) dans ou contre le cadre de l'écran (34), et que les repères tactiles sont conçus sous forme de renfoncements et sont ouverts en direction de l'écran (20), si bien que le doigt de l'utilisateur ou le stylet glisse sur l'écran tactile pour déclencher l'élément de commande virtuel (22.1 ... 22.n ; 24.1...24.n) affecté au renfoncement concerné.

2. Dispositif selon la revendication 1,
**caractérisé en ce**
**que** les repères tactiles sont disposés symétriquement à un axe longitudinal et/ou transversal (68) de l'écran tactile (20) sur des sections opposées (36, 38) du cadre de l'écran (34).

3. Dispositif selon la revendication 1 ou la revendication 2,
**caractérisé en ce**
**que** le cadre de l'écran (34) fait partie d'un boîtier (32) logeant l'écran tactile (20).

4. Dispositif selon au moins l'une des revendications précédentes,
**caractérisé en ce**
**que** le boîtier (32) logeant l'écran tactile (20) présente une conception symétrique.

5. Dispositif selon au moins l'une des revendications précédentes,
**caractérisé en ce**
**que** le boîtier (32) présente sur sa face arrière (66) deux éléments de support (70, 72) et qu'un interrupteur de sécurité (74, 76) est intégré dans chaque élément de support (70, 72).

6. Dispositif selon au moins l'une des revendications précédentes,
**caractérisé en ce**
**qu'**un des éléments de commande virtuels (60) est conçu sous forme d'élément coulissant virtuel, et que l'élément coulissant virtuel (60) sur l'écran tactile (20) est disposé le long d'une section de bord (56) du cadre de l'écran, de préférence au milieu par rapport à un repère tactile (43) conçu sous forme d'un bouton, si bien que la section de bord (56) forme un guide lors du déplacement du doigt le long de la section de bord.

7. Dispositif selon la revendication 6,
**caractérisé en ce**
**qu'**une valeur analogue de la fonction de l'élément coulissant virtuel (60) est affectée à une course de coulissement entre deux repères tactiles (42.1 ...42.n).
